# EUROPEAN PATENT SPECIFICATION

(11) **EP 3 045 382 B1**
(45) Date of publication and mention of the grant of the patent: **12.08.2020**
(21) Application number: 15823304.9
(22) Date of filing: 06.02.2015
(51) Int. Cl.: B63B 3/42, B63H 5/08, B63H 5/16

(54) **PROPULSION DEVICE FOR NEIGHBORING-TWIN-SCREW SHIP HAVING SHAFT BRACKETS, AND SHIP**
ANTRIEBSVORRICHTUNG FÜR SCHIFF MIT NEBENEINANDERLIEGENDEN DOPPELSCHRAUBEN MIT WELLENBÖCKEN UND SCHIFF
DISPOSITIF DE PROPULSION POUR BATEAU À DEUX VIS VOISINES AYANT DES SUPPORTS D'ARBRE, ET NAVIRE

(30) Priority: 18.11.2014 JP 2014233258
(43) Date of publication of application: 20.07.2016
(73) Proprietor: MITSUBISHI HEAVY INDUSTRIES, LTD., Chiyoda-ku Tokyo 100-8332 (JP)
(72) Inventor: MATSUMOTO, Daisuke, Tokyo 108-8215 (JP)
(74) Representative: Henkel & Partner mbB
(86) International application number: PCT/JP2015/053372
(87) International publication number: WO 2016/080002

(56) References cited:
- JP-A- S59 202 991
- JP-A- 2011 098 678
- JP-A- 2011 121 569
- JP-B1- S4 737 316
- JP-U- H0 315 300
- JP-U- S6 072 800
- JP-U- S6 072 800
- US-A1- 2012 042 819
- US-B1- 7 798 875

## Description

### [Technical Field]

The present invention relates to a propulsion device for a proximity twin-screw vessel having a shaft bracket, and a ship.

Priority is claimed on Japanese Patent Application 2014-233258, filed November 18, 2014.

### [Background Art]

A propulsion device of a ship generally obtains a propulsive force by rotating a propeller using a main engine.

In the case of a ship known as a single screw vessel including one main engine and one propeller, when the ship is increased in size, a load level applied to the one propeller is increased. In order to obtain a sufficient propulsive force, a rotational speed of the propeller should be increased or a diameter of the propeller should be increased. Accordingly, since a circumferential speed of the propeller is increased, a pressure in the vicinity of a propeller blade end is lowered, and cavitation that is a phenomenon in which bubbles are generated in water may excessively occur. When cavitation occurs, the hull is vibrated through the stern and the bottom of the ship. In addition, erosion occurs in the propeller due to the cavitation and exerts a bad influence on durability of the propeller.

Here, it is known that the above-mentioned problems can be solved in a ship known as a twin-screw vessel including two main engines and two propellers. In a twin-screw vessel, a load level per propeller can be reduced to improve propeller efficiency, and cavitation can be suppressed.

As examples in which two propellers are disposed at the stern, an overlapping propeller (OLP) type, an interlock propeller type, a type in which propellers are arranged at left and right sides in parallel, and so on, are provided.

Among these, in the OLP type, the two propellers are disposed to be deviated at front and rear sides thereof, and at least portions of the two propellers when seen from the stern are disposed to overlap each other. The propulsion performance can be improved by 5 to 10% than the single screw vessel by employing the OLP type.

In the interlock propeller type, a blade of the other propeller is disposed to enter between blades of one propeller.

In the type in which the propellers are arranged at left and right sides in parallel, the propellers are disposed at the same position in a vessel longitudinal direction in parallel.

### [Citation List]

### [Patent Literature]

[Patent Literature 1] PCT International Publication No. WO2006/095774
[Patent Literature 2] US 2012/0042819 A1

### [Summary of Invention]

### [Technical Problem]

However, when the OLP type is used, the propeller disposed at the rear side alternately passes through a fast flow accelerated by the front propeller and a slow flow in the vicinity of a center in a vessel widthwise direction (a widthwise direction of the vessel) during one rotation. For this reason, a load applied to propeller blades of the rear propeller is largely varied. As a result, in the twin-screw vessel using the OLP type, in comparison with the single screw vessel, a bearing force applied to a bearing of a propeller shaft of the rear propeller may become excessive.

In addition, since a rotational flow having a high velocity is newly formed by rotation of the front propeller, the rear propeller should be operated in an extremely complicated flow, which widens a range in which cavitation occurs. As a result, excessive vibration may be generated. Further, when tip vortex cavitation (blade end vortex cavitation) occurs from front ends of propeller blades of the front propeller, erosion may occur in the propeller blades due to burst of the generated bubbles on propeller blade surfaces of the rear propeller.

In addition, in the case of the interlock propeller type, rotation of both of the propellers should be controlled such that the blades of one propeller and the blades of the other propeller do not interfere with each other and roll control becomes difficult. In addition, in the worst case, when the blades of one propeller interfere with the blades of the other propeller, the propeller may be damaged.

The present invention is directed to provide a propulsion device for a proximity twin-screw vessel having a shaft bracket and a ship that are capable of improving propulsion performance while suppressing cavitation, erosion, or the like.

### [Solution to Problem]

According to a first aspect of the present invention, there is provided a propulsion device for a proximity twin-screw vessel having the features of claim 1.

In this way, since the starboard propeller and the port propeller are disposed to approach the vicinity of the center in the vessel widthwise direction (referred to as the proximity twin-screw type), a longitudinal vortex in the vicinity of the center in the vessel widthwise direction can be efficiently recovered, and propulsion performance can be improved. In addition, the starboard propeller and the port propeller do not interfere with each other like an interlock propeller. Then, since the starboard propeller and the port propeller are disposed in parallel, in comparison with the OLP type, risks such as an excessive bearing force in the rear propeller, expansion of a cavitation range, erosion, can be largely suppressed.

According to the above-mentioned configuration, a front edge of the rudder can approach the starboard propeller and the port propeller, and a slip stream from the starboard propeller and the port propeller can securely abut a rudder surface. Accordingly, control effectiveness of the rudder and propulsion performance can be improved.

According to the above-mentioned configuration, when the stern structure of the single screw vessel type is provided, an effect of the above-mentioned aspects can be particularly remarkably exhibited. In addition, in the stern structure of the single screw vessel type, in comparison with the case in which a skeg serving as the stern structure of the twin-screw vessel type is provided, a longitudinal vortex turning inward in the vicinity of the center in the vessel widthwise direction can be strengthened, and in the starboard propeller and the port propeller rotating along the outer track, the flow can be efficiently recovered and the propulsion performance can be improved.

According to the above-mentioned configuration, since flows in an opposite direction of the rotational direction of the port propeller and the starboard propeller are provided by the strut, a velocity in the rotational direction of the flows of the port propeller and the starboard propeller (10R) is relatively increased. Accordingly, in the starboard propeller (10R) and the port propeller, forward thrust can be further exhibited, and the propulsion performance can be improved.

In the propulsion device for the proximity twin-screw vessel having the shaft bracket, the shaft support section may include one or more fins radially extending from an outer circumferential section of a lower section thereof, and each of the fins may be formed to provide flows in an opposite direction of a rotational direction of the port propeller and the starboard propeller in lower sections of the port propeller and the starboard propeller.

According to the above-mentioned configuration, since the flows in the opposite direction of the rotational direction of the port propeller and the starboard propeller are provided by the fins, a velocity in the rotational direction of the flows of the port propeller and the starboard propeller is relatively increased. Accordingly, in the starboard propeller and the port propeller, forward thrust can be further exhibited, and the propulsion performance can be improved.

According to a second aspect of the present invention, a ship includes the propulsion device for the proximity twin-screw vessel having the shaft bracket according to any one of the above-mentioned aspects.

According to the above-mentioned configuration, as the starboard propeller and the port propeller are disposed to approach the vicinity of the center in the vessel widthwise direction, the propulsion performance can be improved. Risks such as generation of a bearing force, cavitation, erosion, and so on, in the starboard propeller and the port propeller can be largely suppressed.

### [Advantageous Effects of Invention]

According to the propulsion device for the proximity twin-screw vessel having the shaft bracket and the ship of the present invention, the propulsion performance can be improved while suppressing cavitation, erosion, or the like.

### [Brief Description of Drawings]

Fig. 1 is a bottom view showing a configuration of a propulsion device for a proximity twin-screw vessel having a shaft bracket of a first embodiment of the present invention.
Fig. 2 is a side view showing a configuration of the propulsion device.
Fig. 3 is a graph showing a relation between a distance d between the propeller tips of both of the port and the starboard of the ship, and propulsion performance of the ship.
Fig. 4 is a conceptual view when the propulsion device is seen from a rear side, schematically showing a relation among a starboard propeller, a port propeller and a vortex.
Fig. 5 is a bottom view showing a configuration of a propulsion device for a proximity twin-screw vessel having a shaft bracket of a second embodiment of the present invention.
Fig. 6 is an enlarged view of a major part of Fig. 5, showing a cross-sectional shape of a strut of a shaft bracket.
Fig. 7 is a view of the propulsion device for the proximity twin-screw vessel having the shaft bracket of the second embodiment of the present invention when seen from a rear side.
Fig. 8 is a view of a propulsion device for a proximity twin-screw vessel having a shaft bracket of a third embodiment of the present invention when seen from a rear side.

### [Description of Embodiments]

Hereinafter, a propulsion device for a proximity twin-screw vessel having a shaft bracket and a ship of an embodiment of the present invention will be described with reference to the accompanying drawings.

### (First embodiment)

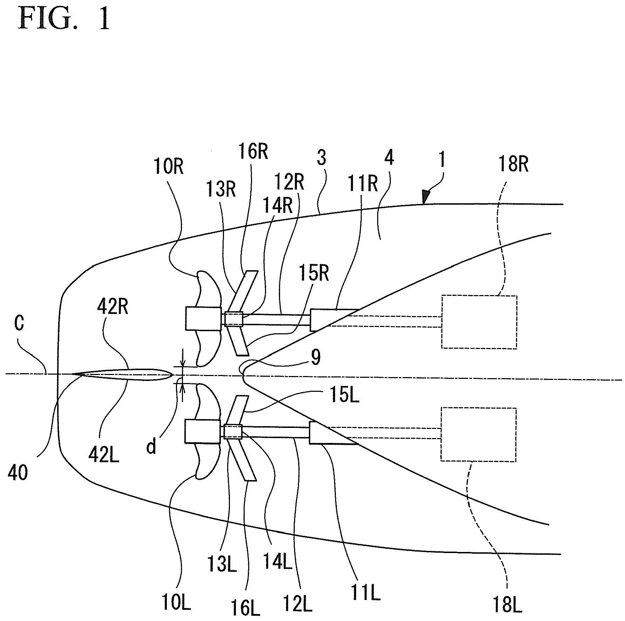

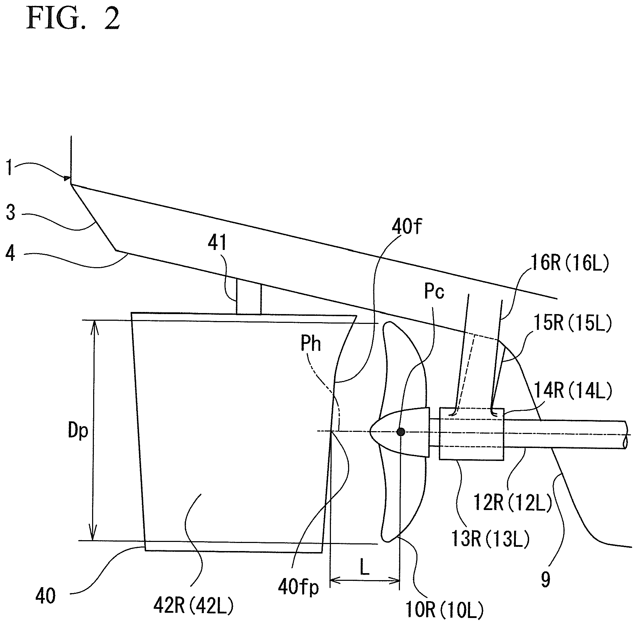

Fig. 1 is a bottom view showing a configuration of a propulsion device for a proximity twin-screw vessel having a shaft bracket of a first embodiment. Fig. 2 is a side view showing the configuration of the propulsion device.

Here, a twin-screw vessel (a ship, a proximity twin-screw vessel) 1 having a stern structure of a single screw vessel type that is a kind of multi-screw vessel is exemplarily described as a ship.

As shown in Fig. 1, a propulsion device of the twin-screw vessel 1 of the embodiment includes a starboard propeller 10R, a port propeller 10L and a rudder 40.

The starboard propeller 10R is installed under a starboard side of the bottom 4 of the stern hull 3 of the ship, that is, the stern of the hull. The starboard propeller 10R is connected to one end of a starboard propeller shaft 12R. A starboard main engine 18R is installed at a starboard side in the stern hull 3. The starboard propeller shaft 12R passes through the stern hull 3 via a bossing 11R formed in the bottom 4 of the ship, and the other end is connected to the starboard main engine 18R. The starboard main engine 18R rotates the starboard propeller 10R via the starboard propeller shaft 12R.

The port propeller 10L is installed under the port side of the bottom 4 of the ship of the stern hull 3. The port propeller 10L is connected to one end of a port propeller shaft 12L. A port main engine 18L is installed at the port side in the stern hull 3. The port propeller shaft 12L passes through the stern hull 3 via a bossing 11L installed in the bottom 4 of the ship, and the other end is connected to the port main engine 18L. The port main engine 18L rotates the port propeller 10L via the port propeller shaft 12L.

As shown in Figs. 1 and 2, the starboard propeller shaft 12R and the port propeller shaft 12L have rear end sections protruding rearward from the stern hull 3 and rotatably supported by shaft brackets 13R and 13L in front of the starboard propeller 10R and the port propeller 10L.

The shaft brackets 13R and 13L includes tubular support sections 14R and 14L configured to rotatably support the starboard propeller shaft 12R and the port propeller shaft 12L, and a plurality of struts 15R, 16R, 15L and 16L extending upward from the tubular support sections 14R and 14L in a V shape and having upper ends connected to the bottom 4 of the stern hull 3.

The starboard propeller 10R and the port propeller 10L are symmetrically disposed with respect to a center C in a vessel widthwise direction to be spaced a distance from each other at which the propeller blades do not interfere with each other. That is, the twin-screw vessel 1 is a type in which the starboard propeller 10R and the port propeller 10L are disposed in parallel, rather than an OLP type or an interlock propeller type.

Here, a distance between the starboard propeller 10R and the port propeller 10L represents a distance d between propeller tips, which is a gap between the outermost circumferential section of the starboard propeller 10R and the outermost circumferential section of the port propeller 10L at the center C side in the vessel widthwise direction. The distance d between the propeller tips may be set to be as small as possible while still avoiding any risk of contact between the propeller blades such that the starboard propeller 10R and the port propeller 10L are disposed to approach the vicinity of the center C in the vessel widthwise direction to capture the longitudinal vortex. The distance d between the propeller tips is determined as follows.

That is, since the twin-screw vessel 1 is a type in which the starboard propeller 10R and the port propeller 10L are arranged in parallel, the distance d between the propeller tips is set to be larger than 0 m. The distance d between the propeller tips may be equal to or larger than 0.1 m. This is so that the starboard propeller 10R and the port propeller 10L do not interfere with each other even when a machining error or an assembly error is considered.

In addition, the distance d between the propeller tips is preferably set to be equal to or less than 1.0 m, and more preferably equal to or less than 0.5 m. This is because reducing the distance d between the propeller tips as much as possible allows the longitudinal vortex close to the center C in the vessel widthwise direction to be captured and the propulsion performance to be further improved.

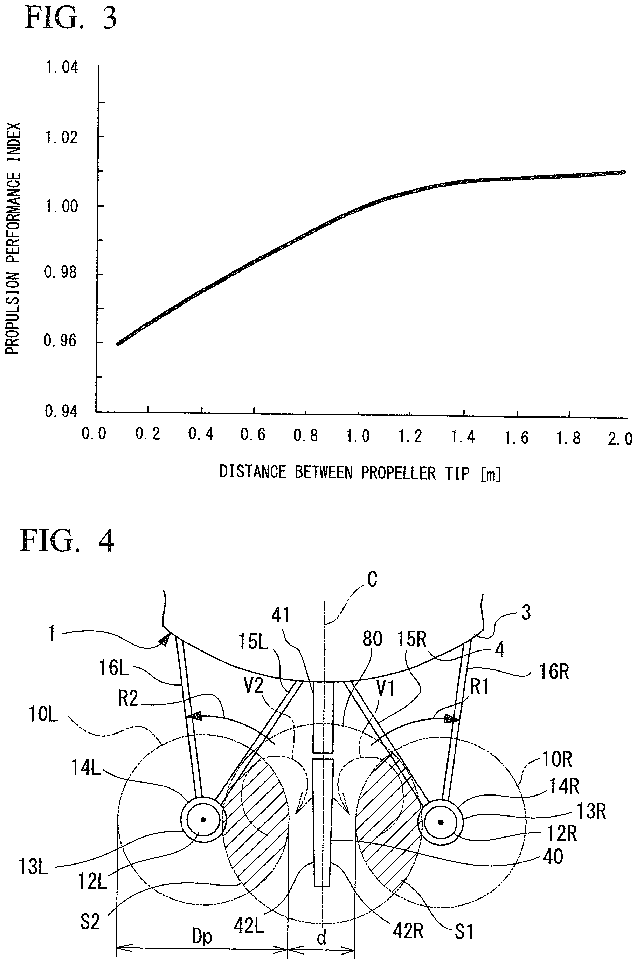

Fig. 3 is a graph showing a relation between the distance d between the propeller tips of both of the port and the starboard of the ship, and the propulsion performance of the ship of the first embodiment of the present invention.

In Fig. 3, a lateral axis shows a value of the distance d between the propeller tips of the starboard propeller 10R and the port propeller 10L. A longitudinal axis is a propulsion performance index of the ship, and shows a value standardized by setting the propulsion performance as 1.0 when the single screw vessel propelled by a set of the propeller and the main engine is provided at the same stern hull 3. Here, the propulsion performance is horsepower performance, and performance becomes better as horsepower required for outputting the same speed is reduced, i.e., fuel efficiency becomes better. Accordingly, lower numerical values of the propulsion performance index indicate better propulsion performance, and higher numerical values indicate worse propulsion performance. Accordingly, in order to improve the propulsion performance in comparison with the single screw vessel, the propulsion performance should be equal to or less than 1.0. Accordingly, an upper limit of the distance d between the propeller tips may be set to 1.0 m.

An example of this will be described below. Fig. 4 is a conceptual view schematically showing a relation among the starboard propeller 10R, the port propeller 10L and the vortex. In Fig. 4, longitudinal vortices V2 and V1 are generated in a region 80 in the vicinity of the center C in the vessel widthwise direction. In order to efficiently recover the longitudinal vortices V2 and V1 of the region 80 and improve the propulsion performance, a rotational direction of the starboard propeller 10R and the port propeller 10L of the twin-screw vessel becomes outer tracks R2 and R1 that rotate outward from the center C in the vessel widthwise direction over the starboard propeller 10R and the port propeller 10L.

The starboard propeller 10R and the port propeller 10L can efficiently recover the longitudinal vortices V1 and V2 within regions S2 and S1 overlapping the region 80. Then, since an area obtained by summing the region S2 and the region S1 is increased as the distance d between the propeller tips is reduced, the propulsion performance can be further improved.

In addition, central heights of the starboard propeller 10R and the port propeller 10L may not be disposed at the same position. However, the central heights may be disposed at the same position in consideration of controllability of the twin-screw vessel 1.

In addition, front end sections 9 at the same heights as the starboard propeller 10R and the port propeller 10L of the stern hull 3 may be disposed closer to the bow side than the positions of the ends of the rotational surfaces of the starboard propeller 10R and the port propeller 10L near the bow side.

The rudder 40 is installed on the center C in the vessel widthwise direction in rear of the starboard propeller 10R and the port propeller 10L.

The rudder 40 is disposed closer to the rear side (the stern side) than the starboard propeller 10R and the port propeller 10L. The rudder 40 has a blade-shaped cross-sectional shape, and is attached to a rudder shaft 41 extending from the bottom 4 of the ship of the stern hull 3 in a vertical downward direction. The rudder 40 is rotated about the vertical axis together with the rudder shaft 41, and changes a course direction of the twin-screw vessel 1.

Here, a front edge 40f of the rudder 40, the starboard propeller 10R and the port propeller 10L may come as close to one another as possible. This is because rapid flows generated by the starboard propeller 10R and the port propeller 10L enter the rudder 40, and thus the control effectiveness of the rudder is improved. Specifically, when a propeller diameter of the starboard propeller 10R and the port propeller 10L is Dp, a distance L between a central position Pc of the starboard propeller 10R and the port propeller 10L and a front edge 40fp of the rudder 40 at a central height Ph of the starboard propeller 10R and the port propeller 10L may be equal to or less than 1.0 Dp.

Accordingly, according to the propulsion device for the proximity twin-screw vessel having the shaft bracket and the ship of the above-mentioned first embodiment, since the starboard propeller 10R and the port propeller 10L are disposed to approach the vicinity of the center C in the vessel widthwise direction, the longitudinal vortex in the vicinity of the center C in the vessel widthwise direction can be efficiently recovered, and the propulsion performance can be improved. In addition, the starboard propeller 10R and the port propeller 10L do not interfere with each other like the interlock propeller type. Accordingly, the twin-screw vessel 1 can be easily manufactured. Then, since the starboard propeller 10R and the port propeller 10L are disposed in parallel, in comparison with the OLP type, risks such as an excessive bearing force of the rear-side propeller, expansion of a cavitation range, erosion, can be largely suppressed.

In this way, according to the twin-screw vessel 1, the propulsion performance can be further improved while suppressing generation of cavitation, erosion, or the like.

In addition, as propeller shafts 12R and 12L are exposed by setting a length of the bossing 11R and 11L in a lower limit and rear end sections thereof are supported by the shaft brackets 13R and 13L, auxiliary section resistance can be suppressed to be small. This can also contribute to improvement of the propulsion performance.

In addition, according to the propulsion device of the twin-screw vessel 1, the distance L between the central position Pc of the port propeller 10L and the starboard propeller 10R, and the front edge 40fp of the rudder 40 at the central height Ph of the port propeller 10L and the starboard propeller 10R is set to be equal to or less than 1.0 Dp. Accordingly, the front edge 40fp of the rudder 40 can approach the starboard propeller 10R and the port propeller 10L, and a slip stream can enter the rudder 40 from the starboard propeller 10R and the port propeller 10L. Accordingly, control effectiveness of the rudder can be improved.

In addition, according to the propulsion device of the twin-screw vessel 1, when the stern hull 3 has a stern structure of the single screw vessel type, the above-mentioned effect can be particularly remarkably exhibited. Further, the stern structure of the single screw vessel type can strengthen the longitudinal vortex turning inward in the vicinity of the center C in the vessel widthwise direction in comparison with the case in which a skeg serving as the stern structure of the twin-screw vessel type is provided, and in the starboard propeller 10R and the port propeller 10L that rotate along the outer track, the flow can be efficiently recovered to improve the propulsion performance.

### (Modified Example of the first embodiment)

Further, in the first embodiment, while the stern hull 3 of the twin-screw vessel 1 has the stern structure of the single screw vessel type, the embodiment is not limited thereto. In the stern hull 3, the skeg extending along the center C in the vessel widthwise direction may be provided in front of the rudder 40.

### (Second embodiment)

Next, a second embodiment of the propulsion device for the proximity twin-screw vessel having the shaft bracket and the ship according to the present invention will be described. Since the second embodiment to be described below is different from the first embodiment only in the configurations of the shaft brackets 13R and 13L, the same components as the first embodiment are designated by the same reference numerals, and overlapping description thereof will be omitted.

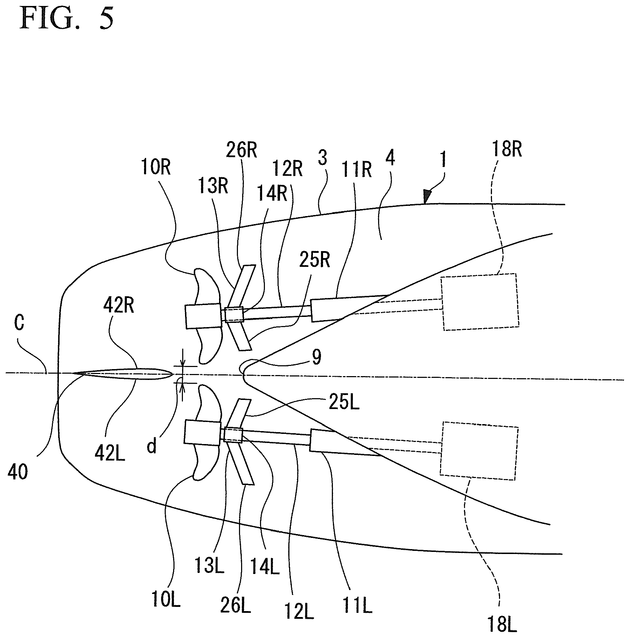

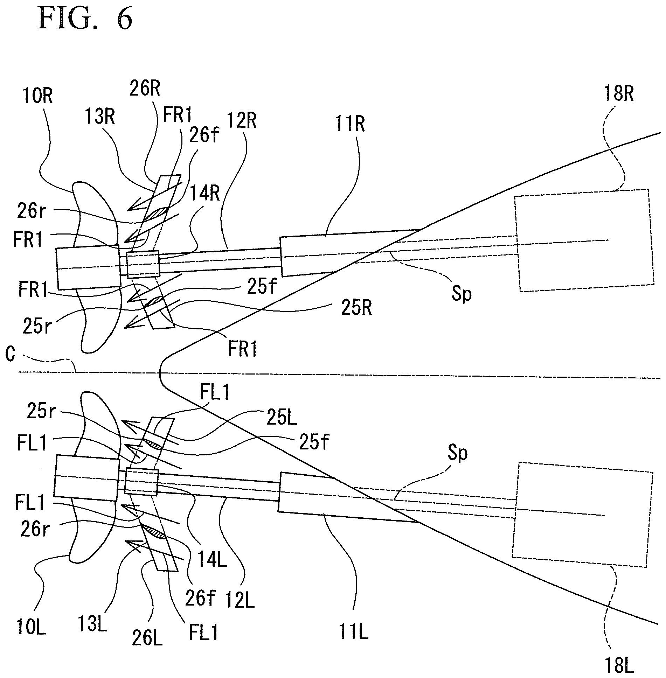

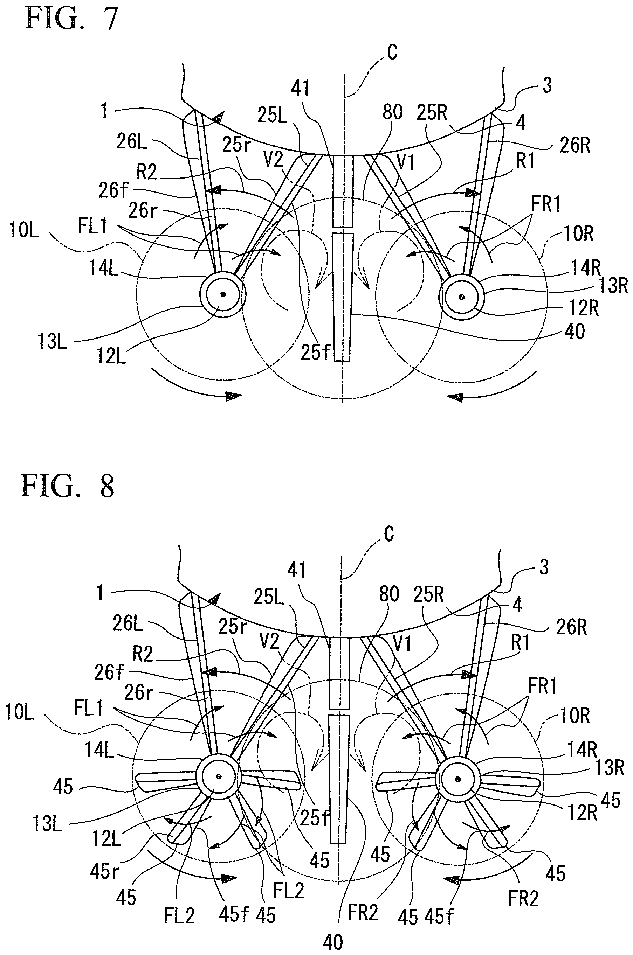

Fig. 5 is a bottom view showing a configuration of the propulsion device of the proximity twin-screw vessel having the shaft bracket of the second embodiment of the present invention. Fig. 6 is an enlarged view of a major part of Fig. 5, showing a cross-sectional shape of a strut of a shaft bracket. Fig. 7 is a view of the propulsion device of the proximity twin-screw vessel having the shaft bracket of the second embodiment of the present invention when seen from a rear side.

As shown in Figs. 5, 6 and 7, the twin-screw vessel 1 according to the embodiment includes the starboard propeller 10R, the port propeller 10L and the rudder 40 provided with the same configuration as in the first embodiment.

The starboard propeller shaft 12R and the port propeller shaft 12L are rotatably supported by the shaft brackets 13R and 13L in front of the starboard propeller 10R and the port propeller 10L. Further, in the embodiment, struts 25R, 26R, 25L and 26L of the shaft brackets 13R and 13L have a blade-shaped cross-sectional shape perpendicular to a direction extending from the bottom 4 of the ship toward the tubular support sections 14R and 14L. Further, the struts 25R, 26R, 25L and 26L are formed to provide flows in an opposite direction of the rotational direction of the starboard propeller 10R and the port propeller 10L in the upper sections of the starboard propeller 10R and the port propeller 10L. That is, the starboard propeller 10R and the port propeller 10L are rotated along the outer tracks R2 and R1 outward from the center C in the vessel widthwise direction over the starboard propeller 10R and the port propeller 10L. Here, the struts 25R, 26R, 25L and 26L are installed to generate flows FR1 and FL1 from the outside in the vessel widthwise direction toward the center C in the vessel widthwise direction over the starboard propeller 10R and the port propeller 10L. Specifically, the struts 25R, 26R, 25L and 26L are formed to be inclined from front edge sections 25f and 26f toward rear edge sections 25r and 26r to gradually approach the center C in the vessel widthwise direction from a propeller shaft direction Sp.

Accordingly, according to the propulsion device for the proximity twin-screw vessel having the shaft bracket and the ship of the above-mentioned second embodiment, the struts 25R, 26R, 25L and 26L of the shaft brackets 13R and 13L have a blade-shaped cross-sectional shape, and the flows FR1 and FL1 from the outside in the vessel widthwise direction opposite to the rotational direction of the starboard propeller 10R and the port propeller 10L are provided in the upper sections of the starboard propeller 10R and the port propeller 10L rotating along the outer tracks R2 and R1 toward the center C in the vessel widthwise direction. Accordingly, a velocity in the rotational direction of the flows of the port propeller 10L and the starboard propeller 10R is relatively increased. As a result, the slip stream that passes the struts 25R, 26R, 25L and 26L of the shaft brackets 13R and 13L can be efficiently recovered by the starboard propeller 10R and the port propeller 10L, and the propulsion performance can be improved.

In addition, according to the propulsion device for the twin-screw vessel 1, like the first embodiment, since the starboard propeller 10R and the port propeller 10L are disposed in the vicinity of the center C in the vessel widthwise direction, the longitudinal vortex in the vicinity of the center C in the vessel widthwise direction can be efficiently recovered, and the propulsion performance can be improved. In addition, the starboard propeller 10R and the port propeller 10L do not interfere with each other like the interlock propeller type. Accordingly, the twin-screw vessel 1 can be easily manufactured. Then, since the starboard propeller 10R and the port propeller 10L are disposed in parallel, in comparison with the OLP type, risks such as an excessive bearing force in the rear-side propeller, expansion of a cavitation range, erosion, can be largely suppressed.

In this way, according to the twin-screw vessel 1, the propulsion performance can be improved while suppressing cavitation, erosion, or the like.

As shown in Figs. 5 and 6, in the configuration of the embodiment, the propeller shaft direction Sp may be inclined with respect to the center C in the vessel widthwise direction, and the starboard propeller shaft 12R and the port propeller shaft 12L or the port main engine 18L and the starboard main engine 18R may be disposed such that a distance between the starboard propeller shaft 12R and the port propeller shaft 12L is gradually reduced toward the rear of the hull to have a horizontal rake.

### (Third embodiment)

Next, a third embodiment of the propulsion device for the proximity twin-screw vessel having the shaft bracket and the ship according to the present invention will be described. Since the third embodiment to be described below is different from the second embodiment only in the configurations of the shaft brackets 13R and 13L, the same components as the second embodiment are designated by the same reference numerals, and overlapping description thereof will be omitted.

Fig. 8 is a view of the propulsion device of the proximity twin-screw vessel having the shaft bracket of the third embodiment of the present invention, when seen from a rear side.

As shown in Fig. 8, the twin-screw vessel 1 according to the embodiment includes the starboard propeller 10R, the port propeller 10L and the rudder 40 provided with the same configuration as in the second embodiment.

The starboard propeller shaft 12R and the port propeller shaft 12L are rotatably supported by the shaft brackets 13R and 13L in front of the starboard propeller 10R and the port propeller 10L. In the embodiment, the tubular support sections 14R and 14L of the shaft brackets 13R and 13L include one or more (in the embodiment, four) fins 45 extending in a radial direction and formed at outer circumferential sections of lower sections thereof.

The fins 45 have a blade-shaped cross-sectional shape perpendicular to a direction extending from the tubular support sections 14R and 14L toward the outer circumference. Further, the fins 45 are formed to provide flows in an opposite direction of the rotational direction of the starboard propeller 10R and the port propeller 10L in the lower sections of the starboard propeller 10R and the port propeller 10L. That is, the starboard propeller 10R and the port propeller 10L are rotated from the outside toward the center C in the vessel widthwise direction under the starboard propeller 10R and the port propeller 10L. Here, the fins 45 are formed to generate flows FR2 and FL2 from the center C in the vessel widthwise direction outward in the vessel widthwise direction under the starboard propeller 10R and the port propeller 10L. Specifically, the fins 45 are formed to be inclined from a front edge section 45f toward a rear edge section 45r and to gradually go away from the center C in the vessel widthwise direction outward in the vessel widthwise direction under the starboard propeller 10R and the port propeller 10L.

Accordingly, according to the propulsion device for the proximity twin-screw vessel having the shaft bracket and the ship of the above-mentioned third embodiment, the fins 45 installed at the shaft brackets 13R and 13L have a blade-shaped cross-sectional shape, and the flows FR2 and FL2 having a vortex shape from the center C in the vessel widthwise direction in an opposite direction of the rotational direction of the starboard propeller 10R and the port propeller 10L outward in the vessel widthwise direction can be provided in the lower sections of the starboard propeller 10R and the port propeller 10L. Accordingly, a velocity in the rotational direction of the flows of the port propeller 10L and the starboard propeller 10R is relatively increased. As a result, the slip stream that passes the fins 45 of the shaft brackets 13R and 13L can be efficiently recovered by the starboard propeller 10R and the port propeller 10L, and the propulsion performance can be improved.

In addition, according to the propulsion device for the twin-screw vessel 1, like the first and second embodiments, since the starboard propeller 10R and the port propeller 10L are disposed to approach the vicinity of the center C in the vessel widthwise direction, the longitudinal vortex in the vicinity of the center C in the vessel widthwise direction can be efficiently recovered, and the propulsion performance can be improved. In addition, the starboard propeller 10R and the port propeller 10L do not interfere with each other like the interlock propeller type. Accordingly, the twin-screw vessel 1 can be easily manufactured. Then, since the starboard propeller 10R and the port propeller 10L are disposed in parallel, in comparison with the OLP type, risks such as an excessive bearing force in the rear-side propeller, expansion of a cavitation range, erosion, can be largely suppressed.

In this way, according to the twin-screw vessel 1, the propulsion performance can be improved while suppressing cavitation, erosion, or the like.

Further, in the third embodiment, while the same struts 25R, 26R, 25L and 26L as in the second embodiment are provided, the embodiment is not limited thereto but the same struts 15R, 16R, 15L and 16L as in the first embodiment may be provided.

### (Other Modified Examples)

Further, the present invention is not limited to the above-mentioned embodiments but various modifications may be added to the above-mentioned embodiments without departing from the scope of the present invention. That is, the specific shapes, configurations, and so on, are exemplarily mentioned in the embodiments and may be appropriately modified.

### [Reference Signs List]

- 1: twin-screw vessel (ship, proximity twin-screw vessel)
- 3: stern hull
- 4: bottom of ship
- 9: front end section
- 10L: port propeller
- 10R: starboard propeller
- 11L, 11R: bossing
- 12L: port propeller shaft
- 12R: starboard propeller shaft
- 13R, 13L: shaft bracket
- 14R, 14L: tubular support section
- 15R, 15L, 16R, 16L, 25R, 25L, 26R, 26L: strut
- 18L: port main engine
- 18R: starboard main engine
- 40: rudder
- 40f, 40fp: front edge
- 41: rudder shaft
- 45: fin
- 80: region
- C: center of vessel widthwise direction
- D: distance between propeller tips
- Ls: reference line
- V1, V2: longitudinal vortex

## Claims

1. A propulsion device for a proximity twin-screw vessel having a shaft bracket, the propulsion device comprising:
a port propeller (10L) and a starboard propeller (10R) installed at a stern hull (3);
one rudder (40) disposed at a center (C) in a vessel widthwise direction of the stern hull (3) or two rudders constituted by a port rudder and a starboard rudder in rear of the port propeller (10L) and the starboard propeller (10R); and
shaft brackets (13L,13R) installed in front of the port propeller (10L) and the starboard propeller (10R), respectively, and configured to rotatably support propeller shafts (12L) of the port propeller (10L) and the starboard propeller (10R),
wherein a distance (D) between a tip end of a propeller blade of the port propeller (10L) and a tip end of a propeller blade of the starboard propeller (10R) at the center (C) in the vessel widthwise direction is larger than 0 m and equal to or smaller than 1.0 m,
wherein a rotational direction of the port propeller (10L) and the starboard propeller (10R) becomes an outer track rotating from the center (C) in the vessel widthwise direction toward the outside over the port propeller (10L) and the starboard propeller (10R),
wherein, provided that propeller diameters of the port propeller (10L) and the starboard propeller (10R) are Dp, a distance (L) between a central position (Pc) of the port propeller (10L) and the starboard propeller (10R) and a front edge (40fp) of the rudder (40) at a central height (Ph) of the port propeller (10L) and the starboard propeller (10R) is equal to or less than 1.0 Dp,
wherein the shaft bracket (13L,13R) comprises a shaft support section (14L,14R) configured to rotatably support the propeller shafts (12L,12R) of the port propeller (10L) and the starboard propeller (10R), and a strut (25L, 25R; 26L, 26R) extending upward from the shaft support section (14L,14R), the strut (25L, 25R; 26L, 26R) configured to connect the shaft support section (14L,14R) and the stern hull (3),
wherein the strut (25L, 25R; 26L, 26R) is formed to provide flows (FL1,FR1) in an opposite direction of the rotational direction of the port propeller (10L) and the starboard propeller (10R) in upper sections of the port propeller (10L) and the starboard propeller (10R),
wherein the stern hull (3) is a stern structure of a single screw vessel type, in which a front end section (9) at the same heights as the port propeller (10L) and the starboard propeller (10R) of the stern hull (3) is disposed closer to the bow side than the positions of the ends of the rotational surface of the port propeller (10L) and the starboard propeller (10R) near the bow side,
wherein the shaft support section (14L,14R) is disposed closer to the stern side than the front end section (9), and
wherein the strut (25L, 25R; 26L, 26R) has the shaft bracket (13L,13R) which is disposed closer to the bow side than the positions of the ends of the rotational surfaces of the port propeller (10L) and the starboard propeller (10R) near the bow side, closer to the stern side than the front end section (9), and extending upwardly from the shaft support section (14L,14R) to be connected to the hull.

2. The propulsion device of the proximity twin-screw vessel having the shaft bracket according to claim 1, wherein the shaft support section (13L,13R) comprises one or more fins (45) radially extending from an outer circumferential section of a lower section thereof, and each of the fins (45) is formed to provide flows (FL2,FR2) in an opposite direction of a rotational direction of the port propeller (10L) and the starboard propeller (10R) in lower sections of the port propeller (10L) and the starboard propeller (10R).

3. A ship comprising the propulsion device of the proximity twin-screw vessel having the shaft bracket according to claim 1 or 2.

## Patentansprüche

1. Eine Antriebsvorrichtung für ein Wasserfahrzeug mit nebeneinanderliegenden Doppelschrauben mit einer Wellenhalterung, wobei die Antriebsvorrichtung umfasst:
einen Backbordpropeller (10L) und einen Steuerbordpropeller (10R), die an einem Heckrumpf (3) installiert sind,
ein Ruder (40), das an einer Mitte (C) in einer Wasserfahrzeug-Breitenrichtung des Heckrumpfes (3) angeordnet ist, oder zwei Ruder, die durch ein Backbordruder und ein Steuerbordruder hinter dem Backbordpropeller (10L) und dem Steuerbordpropeller (10R) gebildet sind, und
Wellenhalterungen (13L,13R), die jeweils vor dem Backbordpropeller (10L) und dem Steuerbordpropeller (10R) installiert und so konfiguriert sind, dass sie die Propellerwellen (12L) des Backbordpropellers (10L) und des Steuerbordpropellers (10R) drehbar tragen,
wobei ein Abstand (D) zwischen einem Außenende eines Propellerblatts des Backbordpropellers (10L) und einem Außenende eines Propellerblatts des Steuerbordpropellers (10R) an der Mitte (C) in der Wasserfahrzeug-Breitenrichtung größer als 0 m und gleich oder kleiner als 1,0 m ist,
wobei eine Drehrichtung des Backbordpropellers (10L) und des Steuerbordpropellers (10R) zu einer äußeren Spur wird, die sich von der Mitte (C) in der Wasserfahrzeug-Breitenrichtung nach außen über den Backbordpropeller (10L) und den Steuerbordpropeller (10R) dreht,
wobei, vorausgesetzt, dass Propellerdurchmesser des Backbordpropellers (10L) und des Steuerbordpropellers (10R) Dp sind, ein Abstand (L) zwischen einer zentralen Position (Pc) des Backbordpropellers (10L) und des Steuerbordpropellers (10R) und einer Vorderkante (40fp) des Ruders (40) an einer zentralen Höhe (Ph) des Backbordpropellers (10L) und des Steuerbordpropellers (10R) gleich oder kleiner als 1,0 Dp ist,
wobei die Wellenhalterung (13L, 13R) einen Wellenstützabschnitt (14L,14R), der so konfiguriert ist, dass er die Propellerwellen (12L, 12R) des Backbordpropellers (10L) und des Steuerbordpropellers (10R) drehbar stützt, und eine Strebe (25L,25R;26L,26R) umfasst, die sich von dem Wellenstützabschnitt (14L, 14R) nach oben erstreckt, wobei die Strebe (25L,25R;26L,26R) konfiguriert ist, um den Wellenstützabschnitt (14L,14R) und den Heckrumpf (3) zu verbinden,
wobei die Strebe (25L,25R;26L,26R) ausgebildet ist, um Strömungen (FL1,FR1) in einer entgegengesetzten Richtung der Drehrichtung des Backbordpropellers (10L) und des Steuerbordpropellers (10R) in oberen Abschnitten des Backbordpropellers (10L) und des Steuerbordpropellers (10R) bereitzustellen,
wobei der Heckrumpf (3) eine Heckstruktur eines EinSchrauben-Schiffstyps ist, bei der ein vorderer Endabschnitt (9) auf den gleichen Höhen wie der Backbordpropeller (10L) und der Steuerbordpropeller (10R) des Heckrumpfs (3) näher an der Bugseite angeordnet ist als die Positionen der Enden der Rotationsoberfläche des Backbordpropellers (10L) und des Steuerbordpropellers (10R) nahe der Bugseite,
wobei der Wellenstützabschnitt (14L, 14R) näher an der Heckseite als der vordere Endabschnitt (9) angeordnet ist, und
wobei die Strebe (25L,25R;26L,26R) die Wellenhalterung (13L, 13R) aufweist, die näher an der Bugseite angeordnet ist als die Positionen der Enden der Rotationsoberflächen des Backbordpropellers (10L) und des Steuerbordpropellers (10R) nahe der Bugseite, näher an der Heckseite als der vordere Endabschnitt (9), und sich von dem Wellenstützabschnitt (14L,14R) nach oben erstreckt, um mit dem Rumpf verbunden zu sein.

2. Die Antriebsvorrichtung für das Wasserfahrzeug mit nebeneinanderliegenden Doppelschrauben mit der Wellenhalterung nach Anspruch 1, wobei der Wellenstützabschnitt (13L, 13R) eine oder mehrere Rippen (45) aufweist, die sich radial von einem äußeren Umfangsabschnitt eines unteren Abschnitts davon erstrecken, und jede der Rippen (45) so ausgebildet ist, dass sie Strömungen (FL2,FR2) in einer entgegengesetzten Richtung einer Drehrichtung des Backbordpropellers (10L) und des Steuerbordpropellers (10R) in unteren Abschnitten des Backbordpropellers (10L) und des Steuerbordpropellers (10R) bereitstellen.

3. Ein Schiff, das die Antriebsvorrichtung für das Wasserfahrzeug mit nebeneinanderliegenden Doppelschrauben mit der Wellenhalterung nach Anspruch 1 oder 2 umfasst.

## Revendications

1. Dispositif de propulsion d'un bateau à deux vis voisines ayant un gousset d'arbre, le dispositif de propulsion comprenant :
une hélice (10L) de bâbord et une hélice (10R) de tribord montées à une coque (3) de poupe ;
un gouvernail (40) disposé au centre (C) dans une direction suivant la largeur du bateau de la coque (3) de poupe ou deux gouvernails constitués par un gouvernail de bâbord et un gouvernail de tribord à l'arrière de l'hélice (10L) de bâbord et de l'hélice (10R) de tribord ; et
des goussets (13L, 13R) d'arbre montés en face de l'hélice (10L) de bâbord et de l'hélice (10R) de tribord, respectivement, et configurés pour supporter à rotation des arbres (12L) d'hélice de l'hélice (10L) de bâbord et de l'hélice (10R) de tribord,
dans lequel une distance (D), entre une extrémité de pointe d'une pale de l'hélice (10L) de bâbord et une extrémité de pointe d'une pale de l'hélice (10R) de tribord au centre (C) dans la direction suivant la largeur du bateau, est plus grande que 0 m et inférieure où égale à 1,0 m
dans lequel un sens de rotation de l'hélice (10L) de bâbord et de l'hélice (10R) de tribord devient une trajectoire extérieure tournant du centre (C) dans la direction suivant la largeur du bateau vers l'extérieur sur l'hélice (10L) de bâbord et l'hélice (10R) de tribord,
dans lequel, si des diamètres d'hélice de l'hélice (10L) de bâbord et de l'hélice (10R) de tribord sont Dp, une distance (L) entre une position (Pc) centrale de l'hélice (10L) de bâbord et de l'hélice (10R) de tribord et un bord (40fp) avant du gouvernail (40) à hauteur (Ph) centrale de l'hélice (10L) de bâbord et de l'hélice (10R) de tribord est inférieure où égale à 1,0 Dp,
dans lequel le gousset (13L, 13R) d'arbre comprend une partie (14L, 14R) de gousset d'arbre configuré pour supporter à rotation les arbres (12L, 12R) d'hélice de l'hélice (10L) de bâbord et de l'hélice (10R) de tribord, et un montant (25L, 25R ; 26L, 26R) s'étendant vers le haut à partir de la partie (14L, 14R) de gousset d'arbre, le montant (25L, 25R ; 26L, 26R) étant configuré pour relier la partie (14L, 14R) de gousset d'arbre et la coque (3) de poupe,
dans lequel le montant (25L, 25R ; 26L, 26R) est formé pour donner des écoulements (FL1, FR1) dans un sens contraire au sens de rotation de l'hélice (10L) de bâbord et de l'hélice (10R) de tribord dans des parties supérieures de l'hélice (10L) de bâbord et de l'hélice (10R) de tribord,
dans lequel la coque (3) de poupe est une structure de poupe d'un type de bateau à vis unique, dans lequel une partie (9) d'extrémité avant, aux mêmes hauteurs que l'hélice (10L) de bâbord et l'hélice (10R) de tribord de la coque (3) de poupe, est disposée plus près du côté avant que les positions des extrémités des surfaces de rotation de l'hélice (10L) de bâbord et de l'hélice (10R) de tribord près du côté avant, plus près du côté de poupe que la partie (9) d'extrémité avant et s'étendant vers le haut à partir de la partie (14L, 14R) de gousset d'arbre pour être reliée à la coque.

2. Dispositif de propulsion du bateau à deux vis voisines ayant le gousset d'arbre suivant la revendication 1, dans lequel la partie (13L, 13R) de gousset d'arbre comprend une ou plusieurs ailettes (45) issue radialement d'une partie circonférentielle extérieure d'une partie inférieure de celle-ci et chacune des ailettes (45) est formée pour donner des écoulements (FL2, FR2) dans un sens contraire au sens de rotation de l'hélice (10L) de bâbord et de l'hélice (10R) de tribord dans des parties inférieures de l'hélice (10L) de bâbord et de l'hélice (10R) de tribord.

3. Navire comprenant le dispositif de propulsion du bateau à deux vis voisines ayant le gousset d'arbre suivant la revendication 1 ou 2.
